# EUROPÄISCHE PATENTSCHRIFT

(11) **EP 1 490 244 B1**
(45) Veröffentlichungstag und Bekanntmachung des Hinweises auf die Patenterteilung: **09.05.2007**
(21) Anmeldenummer: 02774467.1
(22) Anmeldetag: 17.10.2002
(51) Int. Cl.: B60K 37/06

(54) **BEDIENEINHEIT FÜR EIN FAHRERASSISTENZSYSTEM**
OPERATING UNIT FOR A DRIVER ASSISTANCE SYSTEM
UNITE DE COMMANDE POUR UN SYSTEME D'ASSISTANCE A LA CONDUITE

(30) Priorität: 22.03.2002 DE 10212684
(43) Veröffentlichungstag der Anmeldung: 29.12.2004
(73) Patentinhaber: ROBERT BOSCH GMBH, 70442 Stuttgart (DE)
(72) Erfinder: BRAEUCHLE, Goetz, 74934 Reichartshausen (DE); HEINEBRODT, Martin, 70176 Stuttgart (DE); BOECKER, Juergen, 70499 Stuttgart (DE); GEHRKE, Helmar-Steffen, 71735 Eberdingen/Hochdorf (DE); GUENTHER, Clemens, 76275 Ettlingen (DE); IRION, Albrecht, 70563 Stuttgart (DE)
(86) Internationale Anmeldenummer: PCT/DE2002/003925
(87) Internationale Veröffentlichungsnummer: WO 2003/080384

(56) Entgegenhaltungen:
- EP-A- 1 158 392
- DE-A- 3 836 555
- DE-A- 10 004 525
- DE-C- 19 505 215

## Beschreibung

Die Erfindung betrifft eine Bedieneinheit für ein Fahrerassistenzsystem, das mehrere Betriebsmodi aufweist und bei dem für zumindest einen dieser Modi ein vom Fahrer wählbarer Parameter eingebbar ist.

### STAND DER TECHNIK

Kraftfahrzeuge weisen häufig ein Fahrerassistenzsystem (FAS) auf, gelegentlich auch als ADAS-System (Advanced Driver Assistance System) bezeichnet, das den Zweck hat, den Fahrer bei der Fahrzeugführung zu unterstützen und ihm bestimmte Fahrmanöver zu erleichtern. Ein solches Fahrerassistenzsystem kann mehrere Betriebsmodi aufweisen, die sich auf unterschiedliche Funktionen, beispielsweise auf die Längsführung und die Querführung des Kraftfahrzeugs beziehen. Diese Betriebsmodi können sich auch in ihrem Funktionsumfang unterscheiden.

Beispielsweise kann zur Unterstützung bei der Längsführung des Fahrzeugs ein reines Geschwindigkeitsregelsystem (CC; Cruise Control) vorgesehen sein, mit dem die Geschwindigkeit des Fahrzeugs auf eine vom Fahrer gewählte Wunschgeschwindigkeit geregelt wird. Einen erweiterten Funktionsumfang weist ein sogenanntes ACC-System (Adaptive Cruise Control) auf, das darüber hinaus eine radargestützte Abstandsmessung ermöglicht und es gestattet, ein vorausfahrendes Fahrzeug in einem bestimmten Sollabstand zu verfolgen. Der Sollabstand ist zweckmäßigerweise geschwindigkeitsabhängig und wird deshalb vorzugsweise über eine Zeitlücke definiert, die durch den Quotienten aus dem Sollabstand und der Eigengeschwindigkeit des Fahrzeugs gegeben ist.

Beispiele für Betriebsmodi hinsichtlich der Querführung des Fahrzeugs sind eine Spurverlassenswarnung LDW (Lane Departure Warning) oder, bei erweitertem Funktionsumfang, eine Ouerführungsunterstützung LKS (Lane Keeping Support). In diesen Betriebsmodi wird mit Hilfe einer geeigneten Sensorik, beispielsweise mit Hilfe eines Videosystems, die Lage des Fahrzeugs relativ zur befahrenen Fahrbahn oder Fahrspur bestimmt, und bei LDW erhält der Fahrer eine optische oder akustische Warnung, wenn er die Fahrspur zu verlassen droht, während bei LKS ein automatischer Eingriff in die Lenkung erfolgt, um die Querposition des Fahrzeugs automatisch zu regeln, beispielsweise auf die Spurmitte. Dabei hat der Fahrer jedoch die Möglichkeit, die Regelung zu übersteuern, indem er von Hand das Lenkrad betätigt.

Einige dieser Funktionen werden darüber hinaus durch Eingabebefehle kontrolliert, die der Fahrer situationsabhängig eingibt, um in der jeweiligen Verkehrssituation ein den Wünschen des Fahrers entsprechendes Systemverhalten zu erreichen. Diese Eingabebefehle werden vom Fahrer relativ häufig während der Fahrt verändert, um den Änderungen der Verkehrssituation Rechnung zu tragen. Ein Beispiel für einen solchen Eingabebefehl ist die Wahl der Wunschgeschwindigkeit bei CC oder ACC. Darüber hinaus sind die Funktionen in den verschiedenen Betriebsmodi häufig von Parametern abhängig, die ebenfalls vom Fahrer eingegeben werden, die jedoch den generellen Vorlieben des Fahrers Rechnung tragen und deshalb in der Regel längerfristig gültig sind und nur entsprechend selten verändert werden. Beispiele für solche Parameter sind etwa die Zeitlücke bei ACC und die Dynamik - hart oder weich - mit der bei LKS die Abweichungen des Fahrzeugs von der Spurmitte korrigiert werden.

Generell sollten Bedieneinheiten in Kraftfahrzeugen so konzipiert sein, daß sie möglichst wenige, möglichst übersichtlich angeordnete und ergonomisch betätigbare Bedienelemente umfassen, die es dem Fahrer erlauben, die Eingabeoperationen in möglichst kurzer Zeit vorzunehmen, damit seine Aufmerksamkeit so wenig wie möglich vom Verkehrsgeschehen abgelenkt wird. Dies gilt auch für Bedieneinheiten, mit denen andere Systeme oder Geräte in Kraftfahrzeugen gesteuert werden, beispielsweise Audio-Anlagen, ein Autotelefon und dergleichen. DE 199 43 579 A1 beschreibt eine Bedieneinheit mit einem drehbaren Bedienelement und einem Display, auf dem Menüs und Untermenüs angezeigt werden. in denen der Fahrer mit Hilfe des Bedienelements eine Auswahl vornehmen kann. DE 199 20 525 A1 beschreibt ein Bedienelement in der Form eines Rändelrades, das eine Scroll-Funktion aufweist.

Aus der DE 195 05 215 C1 ist ein Multifunktionsbedienhebel mit einem an einem orthogonal schwenkbaren Hebelstock drehbeweglich gehaltenen Funktionswahlminusbedienelement bekannt, mit dem mehrere Funktionen eines davon ansteuerbaren Elementes einstellbar sind, hierbei ist das Bedienelement axial verschiebbar und in mehreren Axialstellungen rastend auf dem Hebelstock gehalten, wobei es in jeder Axialstellung zwischen mehreren Drehstellungen zur Einstellung zugehöriger Funktionen drehbar ist.

Aus der EP 1 158 392 A2 (beinhaltet die Merkmale des Oberbegriffs des Anspruchs 1) ist ein Bedienverfahren für Komfortfunktionen in einem Kraftfahrzeug bekennt, bei dem zwei Funktionsgruppen mittels eines Bedienelement gesteuert werden können, wobei die zwei Funktionsgruppen operativ miteinander vorzugsweise gar nicht in Verbindung stehen. Das Bedienkonzept beruht auf fortgesetztem Drehen einer Bedienung, die eine Kombination aus Drehrückschalter mit integrierter Wippe ausgeführt ist und zur Steuerung der beiden Funktionsgruppen dient, wobei ein Linkdrehen die eine Funktionsgruppe aktiviert und ein Rechtsdrehen die andere Funktionsgruppe aktiviert.

Aus der DE 38 36 555 A1 ist eine Multifunktions-Bedieneinrichtung für Kraftfahrzeuge mit einem einzigen bidirektionalen Drehschalter mit Raststellungen und axialer Bewegbarkeit bekannt, wobei Funktionsgruppen mit Hilfe einer Enterfunktion ausgewählt werden und anschließend innerhalb der jeweiligen Funktionsgruppe die zugehörige Funktion auf die selbe Weise eingestellt werden kann.

### AUFGABE, LÖSUNG UND VORTEILE DER ERFINDUNG

Aufgabe der Erfindung ist es, eine Bedieneinheit für ein Fahrerassistenzsystem zu schaffen, das dem Fahrer eine einfache und schnelle Wahl des Betriebsmodus und innerhalb jedes Betriebsmodus eine einfache und schnelle Wahl der zugehörigen Parameter ermöglicht.

Diese Aufgabe wird erfindungsgemäß gelöst durch ein Eingabeelement, das in einer Richtung zur Wahl des Betriebsmodus und unabhängig davon in einer anderen Richtung zur Wahl des Parameters bewegbar ist.

Diese Lösung hat den Vorteil, daß für die Wahl des Betriebsmodus einerseits und für die Wahl des Parameters innerhalb des ausgewählten Modus andererseits nur ein einziges Bedienelement benötigt wird, so daß eine große Vielfalt unterschiedlicher Bedienoperationen mit Hilfe des einzigen Eingabeelements vorgenommen werden kann. Dadurch wird die Übersichtlichkeit der Bedieneinheit erhöht, und es wird vermieden, daß der Fahrer durch eine Vielzahl von verschiedenen Eingabeelementen irritiert wird. Das einzige Eingabeelement läßt sich zudem in ergonomisch besonders günstiger Position anordnen, beispielsweise am Lenkrad, auf dem Armaturenbrett oder vorzugsweise an der Mittelkonsole des Fahrzeugs. Der Fahrer wird sich schon nach kurzer Eingewöhnungszeit an die Lage des einzigen Eingabeelements gewöhnt haben, und er kann dann dieses Eingabeelement "blind" betätigen.

Vorteilhafte Ausgestaltungen der Erfindung ergeben sich aus den Unteransprüchen.

In einer besonders bevorzugten Ausführungsform wird das Eingabeelement durch einen Drucktaster/Drehknopf gebildet, wie er als solcher beispielsweise für die Bedienung von Audioanlagen, Navigationssystemen und dergleichen in Kraftfahrzeugen bekannt ist. Diese Lösung hat daher den Vorteil, daß als Eingabeelement auf im Handel erhältliche Standard-Bauelemente zurückgegriffen werden kann.

Die Umschaltung von einem Betriebsmodus zu einem anderen erfolgt vorzugsweise durch Drücken des Drucktasters. Die Betriebsmodi sind vorzugsweise in einer bestimmten Reihenfolge geordnet und jeder Knopfdruck bewirkt, daß vom aktuellen Betriebsmodus auf den nächsten Betriebsmodus in dieser Reihenfolge weitergeschaltet wird.

Die Parameterwahl erfolgt durch Drehen des Knopfes und bezieht sich jeweils auf den aktuell eingestellten Betriebsmodus. Wenn innerhalb eines Modus zwischen diskreten Parameterwerten gewählt werden kann, beispielsweise zwischen drei oder fünf verschiedenen Zeitlücken für ACC, so kann der Parameter durch Drehen des Knopfes in der einen Richtung erhöht und durch Drehen des Knopfes in der entgegengesetzten Richtung verringert werden. Die Umschaltung von einem Parameter zum anderen wird bevorzugt durch einen leichten Druckpunkt am Drehknopf fühlbar gemacht. Je nach Bedarf kann mit Hilfe des Drehknopfes für bestimmte Betriebsmodi jedoch auch eine stufenlose Parameterwahl ermöglicht werden.

Bevorzugt ist dem Eingabeelement eine Steuereinheit zugeordnet, die von dem Eingabeelement Signale empfängt, die angeben, in welcher Weise - durch Drükken oder Drehen - das Eingabeelement betätigt wurde, und in der der aktuelle Betriebsmodus sowie die derzeit gültigen Parameter für jeden Betriebsmodus gespeichert sind. Diese Ausführungsform hat den Vorteil, daß die Auswertung der Betätigungsoperationen ausschließlich in der Steuereinheit erfolgt, so daß das Eingabeelement keine eigene "Intelligenz" aufzuweisen braucht. Ein weiterer Vorteil besteht darin, daß die Auswertung der Bedienoperationen durch einfache Programmierung der Steuereinheit an die jeweilige Systemkonfiguration angepaßt werden kann. Die Anzahl der wählbaren Betriebsmodi und die Anzahlen und Bedeutungen der Parameter innerhalb der einzelnen Modi lassen sich daher nach Bedarf variieren.

Ein besonderer Vorteil dieser Lösung besteht ferner darin, daß zwischen den Parametern und der physikalischen Winkelstellung des Drehknopfes keine feste Beziehung zu bestehen braucht. Wenn der Fahrer durch Knopfdruck den Betriebsmodus wechselt, wird somit der gültige Parameterwert für den neuen Betriebsmodus nicht durch die aktuelle Winkelstellung des Knopfes bestimmt, sondern es bleibt vielmehr derjenige Parameterwert erhalten, der schon für diesen Modus gespeichert ist. Erst wenn der Fahrer den Knopf dreht, wird dieser Parameter verändert. Wenn der Fahrer einmal für jeden Betriebsmodus die für ihn bevorzugten Parameter eingestellt hat, kann er somit den Betriebsmodus allein durch einen Druck auf das Eingabeelement wechseln, ohne daß er sich um die Einstellung der Parameter zu kümmern braucht. Das Eingabeelement ist dann vorzugsweise in beiden Richtungen endlos drehbar. Wenn für einen Parameter das Ende des Wertebereiches erreicht ist, beispielsweise der größtmögliche Parameterwert, hat ein Weiterdrehen des Knopfes keine Funktion, d. h., der größtmögliche Wert bleibt erhalten, bis der Fahrer den Knopf in entgegengesetzter Richtung dreht.

Die Betriebsmodi sind vorzugsweise zyklisch angeordnet. D. h., wenn der Fahrer durch mehrmaliges Drücken des Knopfes den letzten verfügbaren Modus erreicht hat und dann noch einmal den Knopf drückt, so wird wieder auf den ersten Betriebsmodus umgeschaltet.

In einer speziellen Ausführungsform läßt sich das Eingabeelement auch zum Ein- und Ausschalten des gesamten Fahrerassistenzsystems nutzen. Dies kann beispielsweise dadurch realisiert werden, daß der ausgeschaltete Zustand als einer der wählbaren Betriebsmodi implementiert wird. Wenn das System ausgeschaltet ist, so wird es durch einmaliges Drücken des Knopfes eingeschaltet, und der aktuelle Betriebsmodus ist dann zunächst derjenige Modus, der auf den AUS-Modus folgt.

Gemäß einer Abwandlung dieser Ausführungsform kann durch Drücken und längeres Halten des Knopfes in der gedrückten Position, beispielsweise für 0,5 s oder 1 s, der aktuelle Betriebsmodus als Standardmodus deklariert werden, der dann beim Einschalten des Systems automatisch eingeschaltet wird. Das Speichern eines Modus als Standardmodus wird dann vorzugsweise durch einen Signalton oder eine Ansage quittiert. Selbstverständlich kann bei dieser Ausführungsvariante der AUS-Modus nicht als Standardmodus deklariert werden.

Zum Ausschalten des Systems wird der Knopf so lange gedrückt, bis der AUS-Modus erreicht ist. Wahlweise kann die Prozedur zum Ausschalten des Systems jedoch auch auf verschiedene Weise abgekürzt werden. Beispielsweise kann die Interpretation der Betätigung des Drucktasters davon abhängig gemacht werden, wieviel Zeit seit der letzten Betätigung dieses Drucktasters vergangen ist. Wenn der Fahrer mit Hilfe des Drucktasters eine Moduswahl vornehmen will, so wird er in der Regel den Drucktaster mehrmals innerhalb kurzer Zeit betätigen. Wenn der Drucktaster für längere Zeit, z. B. innerhalb der letzten 15 Sekunden, nicht betätigt worden ist, so deshalb die erneute Betätigung mit größter Wahrscheinlichkeit als Ausschaltbefehl zu interpretieren. Allerdings wird dann das System zunächst auch dann ausgeschaltet, wenn der Fahrer den Drucktaster nur einmal betätigt, um aus dem aktuellen Modus in den unmittelbar darauf folgenden Modus zu wechseln. Diese Fehlinterpretation läßt sich jedoch korrigieren, indem der Fahrer den Drucktaster sofort noch einmal betätigt.

Gemäß einer anderen Variante kann es auch als Ausschaltbefehl interpretiert werden, wenn der Fahrer die Drucktaste betätigt und für längere Zeit hält, beispielsweise für 1 s oder länger. In diesem Fall kann das Drücken und Halten des Drucktasters allerdings nicht zur Deklaration eines Standardmodus genutzt werden.

Gemäß einer anderen Ausführungsform kann zum Ein- und Ausschalten des Systems oder nur zum Ausschalten ein besonderer Schalter vorgesehen sein. Da in diesem Fall zum Ausschalten des Systems der Drucktaster nicht betätigt zu werden braucht, kann der zuletzt gewählte Modus automatisch als Startmodus gespeichert werden, der dann beim erneuten Einschalten des Systems (durch Betätigen des gesonderten Schalters oder des Drucktasters) aktiviert wird.

Weiterhin kann das Ausschalten des Systems auch durch eine weitere Stellung des Drucktasters erreicht werden. Beispielsweise kann der Drucktaster einen Druckpunkt aufweisen und bei Überschreitung dieses Druckpunktes in einer Ausschaltstellung arretieren. Erneutes Antippen des Drucktasters in der Ausschaltstellung bewirkt dann die Ausschaltung des Systems und zugleich ein Lösen der Arretierung. Wenn der Fahrer den Drucktaster nur bis zum Druckpunkt betätigt, wird dies als Befehl zum Umschalten des Betriebsmodus interpretiert.

### KURZBESCHREIBUNG DER ZEICHNUNG

Im folgenden werden Ausführungsbeispiele anhand der Zeichnung näher erläutert.

Es zeigen:
- Figur 1: eine Bedieneinheit gemäß der Erfindung; und
- Figur 2: eine Tabelle zur Erläuterung der Funktionsweise der Bedieneinheit gemäß Figur 1

### BESCHREIBUNG VON AUSFÜHRUNGSBEISPIELEN

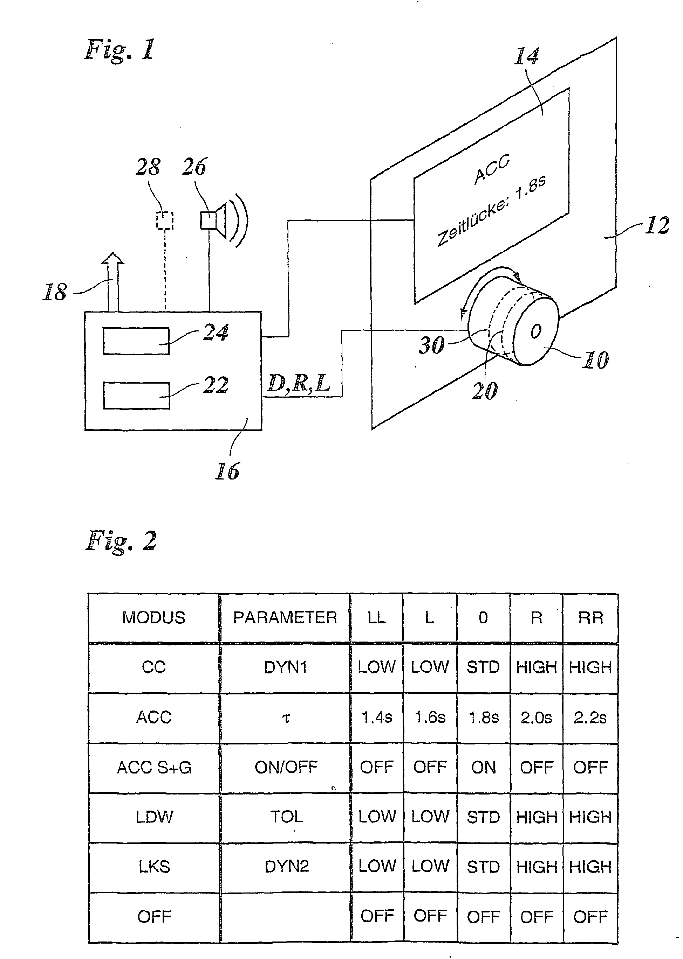

Die in Figur 1 gezeigte Bedieneinheit für ein Fahrerassistenzsystem eines Kraftfahrzeugs umfaßt als Eingabeelement einen drehbaren Knopf 10, der zugleich die Funktion eines Drucktasters erfüllt und er beispielsweise an der Mittelkonsole 12 eines Kraftfahrzeuges angeordnet ist. Oberhalb des Knopfes ist in der Mittelkonsole 12 ein Display 14 angeordnet, auf dem jeweils der aktuelle Betriebsmodus des Fahrerassistenzsystems und der oder die für diesen Modus gültigen Parameter angegeben werden. Im gezeigten Beispiel ist der Betriebsmodus "ACC" (Abstands- und Geschwindigkeitsregelung), und der Parameter ist die bei der Abstandsregelung zugrunde gelegte Zeitlücke, die hier auf 1,8 s eingestellt ist.

Bei Betätigung des Knopfes 10 werden Signale D, R, L vom Knopf 10 an eine elektronische Steuereinheit 16 übermittelt, die ihrerseits das Display 14 steuert und außerdem Befehle bezüglich des Betriebsmodus und der Parameter über einen Datenbus 18, beispielsweise einen CAN-Bus, an nicht gezeigte Steuerungskomponenten des Fahrerassistenzsystems übermittelt. Auch die Kommunikation zwischen der Steuereinheit 16 und dem Knopf 10 und dem Display 14 kann wahlweise über den CAN-Bus erfolgen.

Bei dem Signal D handelt es sich um ein Signal, das anzeigt, daß der Knopf 10 als Drucktaster bis zu einem Druckpunkt 20 niedergedrückt wurde. Das Signal R gibt an, daß der Knopf 10 um einen bestimmten Winkelbetrag nach rechts gedreht wurde, und entsprechend gibt das Signal L an, daß der Knopf nach links gedreht wurde.

Die Steuereinheit 16 enthält einen Speicher 22, in dem der derzeit gültige Betriebsmodus sowie die Parametereinstellungen für sämtliche Modi gespeichert sind. Bei dem Speicher 22 handelt es sich um einen nichtflüchtigen Speicher, in dem die Daten auch bei einer Abschaltung des Fahrerassistenzsystems und auch nach Abschalten der Zündung des Kraftfahrzeugs gespeichert bleiben. Weiterhin enthält die Steuereinheit 16 ein Zeitglied 24, das in der Lage ist, die seit Eintreffen des letzten Signals D vergangene Zeit und/oder die Dauer dieses Signals zu messen und mit einem oder mehreren vorgegebenen Schwellenwerten zu vergleichen. Ein Ausgang der Steuereinheit 16 ist mit einem akustischen Signalgeber 26 verbunden.

In Figur 2 sind die verfügbaren Betriebsmodi des Fahrerassistenzsystems und die zugehörigen Parameter sowie deren mögliche Einstellwerte tabellarisch angegeben. Im gezeigten Beispiel ist das Fahrerassistenzsystem für fünf reguläre Betriebsmodi ausgelegt:
- CC: reine Geschwindigkeitsregelung
- ACC: Abstands- und Geschwindigkeitsregelung
- ACC S + G: Abstands- und Geschwindigkeitsregelung mit Stop and Go Funktion
- LDW: Spurverlassenswarnung
- LKS: Querführungsunterstützung

Im Modus CC wird die Geschwindigkeit des Fahrzeugs auf eine vom Fahrer gewählte Wunschgeschwindigkeit geregelt. Die Einrichtung zur Eingabe der Wunschgeschwindigkeit besteht überlicherweise in einem am Lenkrad angeordneten Hebel und ist nicht Gegenstand dieser Anmeldung. Mit Hilfe dieses Hebels läßt sich die Geschwindigkeitsregelung auch vorübergehend außer Kraft setzen und später durch einen sogenannten "Resume"-Befehl wieder aufnehmen. Im Modus CC kann der Fahrer über einen Parameter "DYN1" die Dynamik des Systems so beeinflussen, daß sie entweder einer eher sportlichen oder einer eher verhaltenen Fahrweise entspricht. Insbesondere spezifiziert der Parameter "DY-N1" die Beschleunigung, mit der bei einem Resume-Befehl, beispielsweise nach einem vorherigen Bremsmanöver, wieder auf die Wunschgeschwindigkeit beschleunigt wird. Der Parameter "DYN1" hat hier drei mögliche Werte "LOW", "STD" (Standard) und "HIGH", entsprechend einer besonders verbrauchsgünstigen, einer normalen und einer sportlichen Fahrweise. Wenn zunächst der Parameter "STD" eingestellt ist, und der Fahrer dann den Knopf 10 nach rechts dreht, so wird beim ersten Auftreten des Signals L der Parameter auf "HIGH" geändert. Wenn der Fahrer den Knopf weiter nach rechts dreht, bleibt der Parameter "HIGH" eingestellt: Entsprechend wird der Parameter "LOW" eingestellt, wenn der Fahrer den Knopf nach links dreht.

Im Modus ACC erfolgt zusätzlich zur Geschwindigkeitsregelung eine Abstandsregelung mit einer bestimmten Zeitlücke τ, sofern vom Radargerät ein unmittelbar vorausfahrendes Fahrzeug geortet wird. Der wählbare Parameter ist hier die Zeitlücke τ, die die Werte 1,4 s, 1,6 s, 1,8 s, 2,0 s und 2,2 s annehmen kann.

Wenn zunächst der Modus CC gewählt wurde, und der Fahrer dann auf den Modus ACC wechseln will, drückt er einmal auf den Knopf 10, so daß das Signal D an die Steuereinheit 16 übermittelt wird. Hierdurch wird auf den ACC-Modus umgeschaltet, und dieser Modus und die zugehörige Zeitlücke werden im Display 14 angezeigt. Durch Drehen des Knopfes 10 nach rechts oder links kann der Fahrer dann die Zeitlücke vergrößern oder verkleinern.

Im Modus ACC S + G ist die ACC-Funktion noch um eine Stop and Go Funktion erweitert, die es beispielsweise bei einem Verkehrsstau ermöglicht, das Fahrzeug automatisch in den Stand abzubremsen, wenn es auf ein stehendes Fahrzeug auffährt, und automatisch wieder anzufahren, wenn auch das vorausfahrende Fahrzeug wieder anfährt. Es ist denkbar, daß auch das Verhalten der Stop and Go-Funktion über einen Parameter beeinflußbar ist, der dann mit dem Knopf 10 eingestellt werden könnte. Beispielsweise könnte dieser Parameter spezifizieren, wie groß der Abstand zum vorderen Fahrzeug sein soll, bei dem das eigene Fahrzeug zum Stand gebracht wird. Im gezeigten Beispiel ist jedoch angenommen, daß für die Stop and Go Funktion kein besonderer Parameter wählbar ist, sondern diese Funktion lediglich ein- oder ausgeschaltet werden kann. Der "Parameter" besteht deshalb hier lediglich in der Option "ON/OFF".

Im Modus LDW wird vom Fahrerassistenzsystem eine akustische Spurverlassenswarnung ausgegeben, wenn sich aus der gemessenen Querposition des Fahrzeugs und er Quergeschwindigkeit ergibt, daß das Fahrzeug droht, die derzeit befahrene Spur zu verlassen. Der Parameter "TOL" (Toleranz) bestimmt hier, bei welchem Grad der Annäherung an die Spurgrenzen die Spurverlassenswarnung ausgegeben wird. Für diesen Parameter sind wieder drei Werte "LOW", "STD" und "HIGH" einstellbar.

Im Modus LKS unterstützt das Fahrerassistenzsystem den Fahrer beim Lenken des Fahrzeugs, indem die Querposition des Fahrzeugs automatisch auf die Spurmitte eingeregelt wird. Der zugehörige Parameter "DYN2" bestimmt hier die Dynamik des Lenkeingriffs durch das LKS-System und hat ebenfalls drei mögliche Einstellwerte "LOW", "STD" und "HIGH".

Im Modus OFF ist das Fahrerassistenzsystem ganz abgeschaltet. Natürlich sind für diesen Modus keine Parameter wählbar. Durch einmaliges Drücken des Knopfes 10 wird jeweils auf den Modus umgeschaltet, der in der Tabelle gemäß Figur 2 eine Zeile tiefer steht. Im Modus OFF bewirkt das einmalige Drücken des Knopfes 10 das Einschalten des Fahrerassistenzsystems und die Wahl des Betriebsmodus CC.

Die Liste der verfügbaren Betriebsmodi könnte bei Bedarf um weitere Funktionen oder Kombinationen von Funktionen erweitert werden. Im gezeigten Beispiel sind die fünf regulären Betriebsmodi hierarchisch aufgebaut, so daß jeder Modus auch die Funktionen der übrigen Modi einschließt, die in der Tabelle gemäß Figur 2 oberhalb dieses Modus stehen. So schließt beispielsweise der Modus ACC auch die Geschwindigkeitsregelfünktion CC ein. Entsprechend ist in den Modi LDW und LKS auch die ACC-Funktion aktiv, da dies in aller Regel den Wünschen des Fahrers entsprechen wird. Wahlweise könnte zu dem Modus LKS ein Modus hinzugefügt werden, indem die Querführungsunterstützung aktiv, aber die ACC-Funktion inaktiv ist. Dies würde jedoch die Liste der wählbaren Betriebsmodi verlängern und daher die Moduswahl zeitraubender machen. Der hier beschriebene hierarchische Aufbau hat demgegenüber den Vorteil, daß die Liste der wählbaren Betriebsmodi überschaubar bleibt.

Der hierarchische Aufbau impliziert allerdings, daß beispielsweise der Parameter "DYN1", der im CC-Modus eingestellt wurde, auch im ACC-Modus wirksam ist. Wenn der Fahrer den Modus ACC gewählt hat und die Dynamik verändern möchte, schaltet er durch mehrmaliges Drücken des Knopfes 10 auf den Modus CC, verändert dann durch Drehen des Knopfes die Dynamik und schaltet wieder zurück auf ACC. Wahlweise kann die Steuereinheit 16 so ausgelegt sein, daß sie die tatsächliche Umschaltung des Modus erst dann vornimmt, wenn seit dem letzten Drücken des Knopfes 10 eine bestimmte, mit dem Zeitglied 24 gemessene Verzögerungszeit abgelaufen ist. Auf diese Weise läßt sich sicherstellen, daß in dem oben beschriebenen Beispiel die ACC-Funktion aktiv bleibt, während der Fahrer den Parameter "DYN1" verändert.

In eine alternativen Ausführungsform ist es möglich, den Modus ACC in zwei Modi aufzuspalten, die jeweils durch eine Zeile in Figur 2 repräsentiert werden, einmal mit Wahlmöglichkeit für den Parameter "DYN1" und einmal mit Wahlmöglichkeit für den Parameter τ.

Aufgrund der hierarchischen Struktur der Betriebsmodi wird generell in den Modi LDW und LKS auch die Funktion ACC S + G aktiv sein. Falls der Fahrer dies nicht wünscht, kann er kurz auf den Modus ACC S + G schalten und dann mit Hilfe des Parameters "ON/OFF" die Stop and Go-Funktion inaktivieren.

Das oben beschriebene Ausführungsbeispiel läßt sich auf verschiedene Weise modifizieren, um die Moduswahl und/oder die Prozedur zum Ausschalten des Fahrerassistenzsystems abzuhürzen.

In einer Ausführungsform ist im Speicher 22 ein Standardmodus gespeichert, der dann beim Einschalten des Fahrerassistenzsystems sofort aktiviert wird. Wenn beispielsweise LKS als Standardmodus gespeichert ist und das System ausgeschaltet ist (Modus "OFF"), so wird durch einmaliges Drücken des Knopfes 10 das System eingeschaltet, und es befindet sich dann nicht im Modus CC, sondern sofort im Modus LKS. Der Standardmodus kann vom Fahrer bestimmt werden, indem er auf den gewünschten Modus schaltet, und dann den Knopf 10 drückt und für eine bestimmte Zeit, beispielsweise für 0,5 Sekunden am Druckpunkt 20 hält. Die Haltezeit wird mit Hilfe des Zeitgliedes 24 gemessen, und wenn die vorbestimmte Zeit abgelaufen ist, so wird der betreffende Modus als Standardmodus gespeichert. Dies wird dem Fahrer durch einen Quittungston des Signalgebers 26 bestätigt. Da es nur einen Standardmodus geben kann, wird gleichzeitig der vorherige Standardmodus gelöscht.

Weiterhin kann das Zeitglied 24 auch dazu benutzt werden, die Ausschaltprozedur abzukürzen. In einer Ausführungsform wird, wenn das Fahrerassistenzsystem eingeschaltet ist, mit Hilfe des Zeitgliedes geprüft, ob seit dem letzten Signal D mehr als beispielsweise 15 Sekunden vergangen sind. Wenn dann der Knopf 10 gedrückt wird, so wird dies als Ausschaltsignal interpretiert. In der Regel wird der Fahrer beim Einschalten des Fahrerassistenzsystems den gewünschten Modus wählen und diesen Modus dann während der Fahrt nicht mehr verändern. Falls der Fahrer beispielsweise beim Einschalten den Modus CC gewählt hat und dann nach längerer Zeit erneut auf den Knopf 10 drückt, so wird das System sofort ausgeschaltet, und der Fahrer braucht nicht erst alle übrigen Modi durchzuschalten, um den Modus OFF zu erreichen. Falls der Fahrer das System nicht ausschalten möchte, sondern wirklich nur von dem Modus CC in den Modus ACC wechseln möchte, betätigt er den Schalter 10 zweimal kurz hintereinander. Dies wird dann als Befehl zum Weiterschalten auf den Modus ACC interpretiert. Entsprechend kann der Fahrer dann durch mehrmaliges Drücken des Knopfes 10 auch jeden anderen Modus wählen.

In einer anderen Ausführungsform wird es als Ausschaltbefehl interpretiert, wenn, während das System eingeschaltet ist, der Knopf 10 gedrückt und für eine bestimmte Zeit gehalten wird. Diese Variante läßt sich allerdings nicht mit der oben beschriebenen Prozedur zur Wahl des Standardmodus kombinieren.

Schließlich ist es auch möglich, den Ausschaltzustand OFF nicht in die Liste der wählbaren Modi aufzunehmen, sondern zum Ausschalten des Systems zusätzlich zu dem Knopf 10 einen separaten Schalter 28 vorzusehen, wie in Figur 1 gestrichelt eingezeichnet ist. Das Einschalten des Systems kann dann wahlweise mit dem Schalter 28 oder durch Drücken des Knopfes 10 erfolgen.

In noch einer anderen Ausführungsform kann die Funktion des Schalters 28 auch dadurch realisiert werden, daß sich der Knopf 10 über den Druckpunkt 20 hinaus eindrücken und dann in einer Ausschaltposition 30 verrasten läßt. In diesem Fall wird von dem Knopf 10 an die Steuereinheit 16 zusätzlich ein Signal übermittelt, daß die Ausschaltposition 30 angibt. Wenn der Fahrer den Knopf 10 in die Ausschaltposition 30 drückt, wird dann das Signal D ignoriert und stattdessen wird das System ausgeschaltet. Durch nochmaliges Drücken des Knopfes 10 kann der Fahrer die Verrastung wieder lösen. Dieser Vorgang wird zugleich als Einschaltbefehl behandelt und wie das Signal D ausgewertet.

Die beiden letztgenannten Ausführungsformen weisen die Besonderheit auf, daß beim Ausschalten des Systems kein Signal D ausgegeben wird, das einen Moduswechsel veranlaßt. Deshalb ist es bei diesen Ausführungsformen möglich, den zuletzt gewählten Betriebsmodus im Speicher 22 zu speichern und beim nächsten Einschalten des Systems automatisch wieder zu aktivieren, so daß der Fahrer nicht erst durch mehrmaliges Drücken des Knopfes 10 zu dem gewünschten Modus durchzuschalten braucht.

## Patentansprüche

1. Bedieneinheit für ein Fahrerassistenzsystem, das mehrere Betriebsmodi (CC, ACC, LDW, LKS) aufweist und bei dem für zumindest einen dieser Modi ein vom Fahrer gewählter Parameter (DYN1, t, TOL, DYN2) eingebbar ist, wobei ein Eingabeelement (10) vorgesehen ist, das in einer Richtung zur Wahl des Betriebsmodus und unabhängig davon in einer anderen Richtung zur Wahl des Parameters bewegbar ist, indem das Eingabeelement ein drehbarer und auch in Axialrichtung bewegbarer Knopf (10) ist und wobei die Betriebsmodi der Reihe nach geordnet sind, und der Knopf (10) als Drucktaster zum Weiterschalten von einem Betriebsmodus auf den nächsten ausgebildet ist und dass die Parameter für den jeweils gewählten Betriebsmodus durch Drehen des Knopfes (10) veränderbar sind **dadurch gekennzeichnet, dass** die Steuereinheit (16) ein Zeitglied (24) aufweist, das die Betätigungsdauer des Knopfes (10) als Drucktaster misst, und dass die Steuereinheit (16), wenn der Knopf (10) länger als ein bestimmtes Zeitintervall gedrückt wird, den gewählten Betriebsmodus als Standardmodus speichert, der beim Einschalten des Fahrerassistenzsystems aktiviert wird.

2. Bedieneinheit nach Anspruch 1, **dadurch gekennzeichnet, dass** dem Eingabeelement (10) eine elektronische Steuereinheit (16) zugeordnet ist, die einen Speicher (22) zur Speicherung des aktuellen Betriebsmodus und zur Speicherung der Parametereinstellungen für die Betriebsmodi aufweist und dazu ausgebildet ist, den Betriebsmodus und die Parameter in Abhängigkeit von Signalen (D, R, L) zu verändern, die Eingabeelement des Knopfes (10) repräsentieren.

3. Bedieneinheit nach Anspruch 1, **dadurch gekennzeichnet, dass** die Betriebsmodi zyklisch durchschaltbar sind.

4. Bedieneinheit nach Anspruch 1 oder 3, **dadurch gekennzeichnet, dass** der Knopf (10) endlos in beiden Richtungen drehbar ist und dass die Steuereinheit (16) den Parameter erhöht, wenn der Knopf (10) um einen bestimmten Winkel in der einen Richtung gedreht wird, und verringert, wenn der Knopf (10) um einen bestimmten Winkel in der anderen Richtung gedreht wird.

5. Bedieneinheit nach einem der vorhergehenden Ansprüche, **dadurch gekennzeichnet, dass** die Steuereinheit (16) ein Zeitglied (24) enthält, das die seit dem letzten Drücken des Knopfes (10) vergangene Zeit misst, und dass die Steuereinheit (16) das Fahrerassistenzsystem abschaltet, wenn der Knopf (10) gedrückt wird und die seit dem letzten Drücken des Knopfes vergangene Zeit größer als ein bestimmter Wert ist.

6. Bedieneinheit nach einem der vorhergehenden Ansprüche, **dadurch gekennzeichnet, dass** der Knopf (10) in seiner Funktion als Drucktaster zugleich einen Einschaltknopf zum Einschalten des Fahrerassistenzsystems bildet.

7. Bedieneinheit nach Anspruch 1, **dadurch gekennzeichnet, dass** einer der Betriebsmodi (OFF) ein AUS-Modus ist, der dem ausgeschalteten Zustand des Fahrerassistenzsystems entspricht.

8. Bedieneinheit nach einem der vorhergehenden Ansprüche, **dadurch gekennzeichnet, dass** zusätzlich zu dem Eingabeelement ein separater Schalter (28) zum Ausschalten des Fahrerassistenzsystems vorgesehen ist.

9. Bedieneinheit nach einem der vorhergehenden Ansprüche, **dadurch gekennzeichnet, dass** der Knopf (10) lösbar in einer Ausschaltpositin (30) zum Ausschalten des Fahrerassistenzsystems verrastbar ist.

10. Bedieneinheit nach Anspruch 8 oder 9, **dadurch gekennzeichnet, dass** die Steuereinheit (16) dazu ausgebildet ist, beim Einschalten des Fahrerassistenzsystems den Betriebsmodus einzustellen, der beim Ausschalten zuletzt aktiv war.

## Claims

1. Operator control unit for a driver assistance system which has a plurality of operating modes (CC, ACC, LDW, LKS) and in which a parameter (DYN1, t, TOL, DYN2) which is selected by the driver can be input for at least one of these modes, an input element (10) being provided which can be moved in one direction in order to select the operating mode, and independently thereof in another direction in order to select the parameter by virtue of the fact that the input element is a rotatable button (10) which can also move in the axial direction, and the operating modes are arranged in series and the button (10) is embodied as a pushbutton key for switching from one operating mode to the next, and that the parameters for the respectively selected operating mode can be changed by rotating the button (10), **characterized in that** the control unit (16) has a timer (24) which measures the activation duration of the button (10) as a pushbutton key, and **in that**, if the button (10) is pressed for longer than a specific time interval, the control unit (16) stores the selected operating mode as a standard mode which is activated when the driver assistance system is switched on.

2. Operator control unit according to Claim 1, **characterized in that** the input element (10) is assigned an electronic control unit (16) which has a memory (22) for storing the current operating mode and for storing the parameter settings for the operating modes and is designed to change the operating mode and the parameters as a function of signals (D, R, L) which represent input elements of the button (10).

3. Operator control unit according to Claim 1, **characterized in that** it is possible to switch through the operating modes cyclically.

4. Operator control unit according to Claim 1 or 3, **characterized in that** the button (10) can be rotated infinitely in both directions, and **in that** the control unit (16) increases the parameter if the button (10) is rotated through a specific angle in one direction, and reduces it if the button (10) is rotated through a specific angle in the other direction.

5. Operator control unit according to one of the preceding claims, **characterized in that** the control unit (16) contains a timer (24) which measures the time which has passed since the button (10) was last pressed, and **in that** the control unit (16) switches off the driver assistance system if the button (10) is pressed and the time which has passed since the button was last pressed is longer than a specific value.

6. Operator control unit according to one of the preceding claims, **characterized in that** the button (10) simultaneously forms, in its function as a pushbutton key, a switch-on button for switching on the driver assistance system.

7. Operator control unit according to Claim 1, **characterized in that** one of the operating modes (OFF) is an OFF mode which corresponds to the switched-off state of the driver assistance system.

8. Operator control unit according to one of the preceding claims, **characterized in that**, in addition to the input element, a separate switch (28) is provided for switching off the driver assistance system.

9. Operator control unit according to one of the preceding claims, **characterized in that** the button (10) can be latched in a detachable fashion in a switch-off position (30) in order to switch off the driver assistance system.

10. Operator control unit according to Claim 8 or 9, **characterized in that** the control unit (16) is designed to set, during the switching on of the driver assistance system, the operating mode which was last active during the switching off process.

## Revendications

1. Unité de sélection pour un système d'assistance à la conduite comportant plusieurs modes de fonctionnement (CC, ACC, LDW, LKS), un paramètre (DYN1, t, TOL, DYN2), choisi par le conducteur, pouvant être saisi pour au moins l'un de ces modes, par un élément de saisie (10) déplaçable dans un sens pour choisir le mode de fonctionnement et dans un autre sens, pour choisir le paramètre ; l'élément de saisie étant un bouton (10) rotatif mobile axialement ; les modes de fonctionnement étant ordonnés ; le bouton (10) étant une touche permettant de passer d'un mode de fonctionnement au suivant et les paramètres pour le mode de fonctionnement respectif choisi pouvant être modifiés en tournant le bouton (10),
**caractérisée en ce que**
l'unité de commande (16) présente un relais de temporisation (24) qui mesure la durée d'actionnement du bouton (10) utilisé comme touche et, lorsque le bouton (10) est pressé au delà d'un certain laps de temps, l'unité de commande (16) sauvegarde le mode de fonctionnement choisi en tant que mode standard activé lors de la mise sous tension du système d'assistance à la conduite.

2. Unité de sélection selon la revendication 1,
**caractérisée en ce qu'**
une unité de commande électronique (16), associée à l'élément de saisie (10), présente une mémoire (22) de sauvegarde du mode de fonctionnement du moment et des paramétrages des modes de fonctionnement, et elle modifie le mode de fonctionnement et les paramètres en fonction de signaux (D, R, L) qui représentent l'élément de saisie du bouton (10).

3. Unité de sélection selon la revendication 1,
**caractérisée en ce que**
les modes de fonctionnement peuvent être commutés de manière cyclique.

4. Unité de sélection selon la revendication 1 ou la revendication 3,
**caractérisée en ce que**
le bouton (10) peut tourner sans fin dans les deux sens et l'unité de commande (16) augmente le paramètre lorsque le bouton (10) est tourné d'un certain angle dans un sens et le diminue lorsque le bouton (10) est tourné d'un certain angle dans le sens inverse.

5. Unité de sélection selon l'une des revendications précédentes,
**caractérisée en ce que**
l'unité de commande (16), par un relais de temporisation (24), mesure le temps écoulé depuis la dernière fois où le bouton (10) a été pressé et elle déconnecte le système d'assistance à la conduite si, lorsque le bouton (10) est pressé, le temps écoulé depuis la précédente pression dépasse une certaine valeur.

6. Unité de sélection selon l'une des revendications précédentes,
**caractérisée en ce que**
dans sa fonction de touche, le bouton (10) met sous tension le système d'assistance à la conduite.

7. Unité de sélection selon la revendication 1,
**caractérisée en ce que**
l'un des modes de fonctionnement (OFF) est un mode d'arrêt qui correspond à la situation déconnectée du système d'assistance à la conduite.

8. Unité de sélection selon l'une des revendications précédentes,
**caractérisée en ce qu'**
outre l'élément de saisie, un interrupteur (28) séparé déconnecte le système d'assistance à la conduite.

9. Unité de sélection selon l'une des revendications précédentes,
**caractérisée en ce que**
le bouton (10) peut être encliqueté de manière amovible dans une position de déconnexion (30) pour déconnecter le système d'assistance à la conduite.

10. Unité de sélection selon la revendication 8 ou la revendication 9,
**caractérisée en ce que**
lors de la mise sous tension du système d'assistance à la conduite, elle se règle sur le dernier mode de fonctionnement actif au moment de la déconnexion.
